# EUROPEAN PATENT APPLICATION

(11) **EP 4 659 933 A1**
(43) Date of publication of application: **10.12.2025**
(21) Application number: 24750288.3
(22) Date of filing: 30.01.2024
(51) Int. Cl.: B29C 49/78, B29C 45/17, B29C 49/06

(54) **BLOW MOLDING DEVICE AND BLOW MOLDING METHOD**

(30) Priority: 30.01.2023 JP 2023011966
(71) Applicant: Nissei ASB Machine Co., Ltd., Komoro-shi, Nagano 384-8585 (JP)
(72) Inventor: KONDO Katsuki, Komoro-shi, Nagano 384-8585 (JP)
(74) Representative: Novagraaf International SA
(86) International application number: PCT/JP2024/002836
(87) International publication number: WO 2024/162339

(57) **Abstract**

An injection molding section (110) that injection-molds a preform, a blow molding section (130) that blow-molds the preform to manufacture a resin container, and an input device (170) that receives an operation for specifying an operation condition of each section are included. The injection molding section (110) is controllable, on the basis of an operation specified by the input device (170), so as to be operated intermittently.

## Description

### TECHNICAL FIELD

The present disclosure relates to a blow molding apparatus and a blow molding method.

### BACKGROUND ART

A blow molding method of a hot parison type is a method of blow molding by utilizing retained heat during injection molding of a preform, and enables manufacture of a container with a diverse and superior aesthetic appearance as compared with that of a cold parison type.

As exemplified in Patent Document 1, for example, various methods and devices have been developed for the purpose of shortening a molding cycle in a hot parison-type blow molding apparatus.

### CITATION LIST

### PATENT LITERATURE

Patent Document 1: JP 2021-102350 A

### SUMMARY OF INVENTION

### TECHNICAL PROBLEM

However, a hot parison type blow molding apparatus such as disclosed in Patent Document 1 is configured such that, in order to secure a quality of a final container, a molding cycle set in advance cannot be substantially changed. Therefore, in a case in which a user wants to adjust a production amount of the container for some reason, the user needs to request an engineer of the blow molding apparatus to change a design of the molding cycle itself, making it difficult to respond quickly for the production amount adjustment.

The present disclosure provides a blow molding apparatus capable of quickly adjusting a production amount without changing a predetermined molding cycle.

### SOLUTION TO PROBLEM

A blow molding apparatus according to an aspect of the present disclosure includes
an injection molding section configured to injection-mold a preform,
a blow molding section configured to blow-mold the preform to manufacture a resin container, and
an input device configured to receive an operation condition for specifying an operation condition of each section, in which
the injection molding section is controllable so as to be operated intermittently, on the basis of an operation specified by the input device.

A blow molding method according to an aspect of the present disclosure includes
an injection molding step of manufacturing a preform by injection molding, and
a blow molding step of blow-molding the injection-molded preform to blow-mold a resin container, in which
the injection molding step includes selecting, on the basis of an input to an input device, whether the injection molding is intermittently performed.

According to the present disclosure, a production amount can be adjusted quickly without changing a predetermined molding cycle.

### BRIEF DESCRIPTION OF DRAWINGS

FIG. 1 illustrates an overall configuration of a blow molding apparatus according to the present embodiment.
FIG. 2 illustrates a blow molding method according to the present embodiment.
FIG. 3 illustrates a screen display by a display section in a lip plate restriction mode.
FIG. 4 illustrates the screen display by the display section in a production amount adjustment mode.
FIG. 5 illustrates a pattern of an intermittent operation of an injection molding section according to the production amount adjustment mode.
FIG. 6 illustrates lip plates where the injection molding section does not operate in a first cycle.
FIG. 7 illustrates the lip plate where the injection molding section does not operate in a second cycle.

### DESCRIPTION OF EMBODIMENTS

Hereinafter, an embodiment of the present disclosure will be described with reference to the drawings. The dimensions of each member illustrated in the drawings may differ from the actual dimensions of each member for convenience of description.

### Overall Configuration

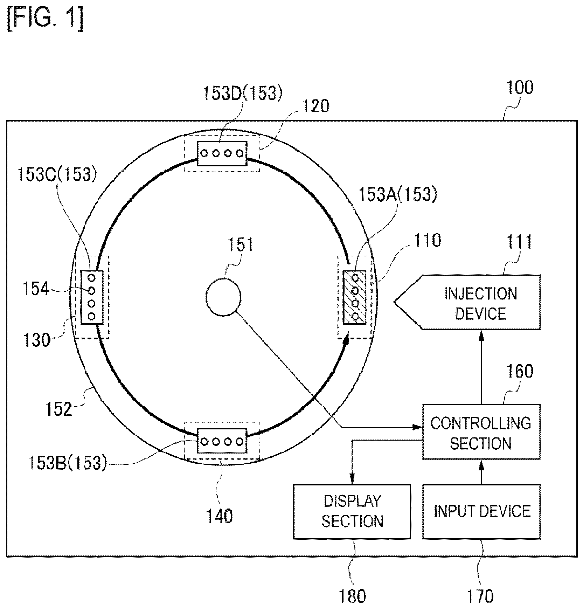

FIG. 1 illustrates an overall configuration of a blow molding apparatus 100. As illustrated in FIG. 1, the blow molding apparatus 100 is a device for manufacturing a resin container by using a hot parison method (one stage blow molding method, injection stretch blow molding method).

The blow molding apparatus 100 includes an injection molding section 110. The injection molding section 110 includes an injection cavity mold and an injection core mold (not illustrated). The injection cavity mold and the injection core mold constitute part of an injection cavity (molding space). The injection molding section 110 further includes an injection device 111 that injects molten resin into the injection cavity. The molten resin is injected from the injection device 111 into the injection cavity, thereby manufacturing a preform for a resin container. That is, the injection molding section 110 is configured to injection-mold the preform.

The blow molding apparatus 100 includes a temperature adjusting section 120. The temperature adjusting section 120 adjusts the preform manufactured by the injection molding section 110 to a temperature suitable for blow molding.

The blow molding apparatus 100 includes a blow molding section 130. The blow molding section 130 is configured to manufacture a resin container by blow-molding the preform.

The blow molding apparatus 100 includes a removal section 140. The removal section 140 is configured to remove the resin container manufactured by the blow molding section 130.

The injection molding section 110, the temperature adjusting section 120, the blow molding section 130, and the removal section 140 are provided at positions obtained by rotation by a predetermined angle about a drive section 151. In the present embodiment, the predetermined angle is 90 degrees. The drive section 151 is provided with a rotating plate 152. The rotating plate 152 is configured to be rotatable by the drive section 151. A lip plate 153 is attached to the rotating plate 152. In the present embodiment, four lip plates 153 are attached to the rotating plate 152. In FIG. 1, the lip plate 153 in the injection molding section 110 may be called a first lip plate 153A. In FIG. 1, the lip plate 153 in the removal section 140 may be called a second lip plate 153B. In FIG. 1, the lip plate 153 in the blow molding section 130 may be called a third lip plate 153C. In FIG. 1, the lip plate 153 in the temperature adjusting section 120 may be called a fourth lip plate 153D. The drive section 151 includes, for example, an electric motor (servo motor or the like) that can detect a rotation angle (rotation position) of each lip plate 153 in an initial state (initial position) of the blow molding apparatus 100 and individually specifying each lip plate 153.

Each of the lip plates 153 includes a plurality of lip molds 154. Each of the lip molds 154 is configured to constitute part of the injection cavity together with the injection cavity mold. Further, the lip mold 154 can hold part of the preform and the resin container. The rotating plate 152 rotates with the lip molds 154 holding part of the preform and resin container, thereby transporting the preform and the resin container to each of the injection molding section 110, the temperature adjusting section 120, the blow molding section 130, and the removal section 140. Note that the lip plates 153 may be configured to hold the plurality of lip molds 154 in a single-row manner or may be configured to hold the plurality of lip molds 154 in a multi-row manner.

Further, the lip plate 153 is configured to circulate between the injection molding section 110 and the blow molding section 130. In the present embodiment, by the rotation of the rotating plate 152, the lip plate 153 is configured to circulate in the order of the injection molding section 110, the temperature adjusting section 120, the blow molding section 130, and the removal section 140.

Materials for forming the preform and the resin container are thermoplastic resins and can be selected as appropriate in accordance with the usage required by the preform and resin container. Examples of specific materials include polyethylene terephthalate (PET), polyethylene naphthalate (PEN), polycyclohexane dimethylene terephthalate (PCTA), Tritan (trade name; a copolyester manufactured by Eastman Chemical Company), polypropylene (PP), polyethylene (PE), polycarbonate (PC), polyethersulfone (PES), polyphenylsulfone (PPSU), polystyrene (PS), cyclic olefin polymer (COP/COC), polymethyl methacrylate (PMMA, acrylic), and polylactic acid (PLA). In addition, an additive such as a coloring material may be added to the material.

The blow molding apparatus 100 includes a controlling section 160. The controlling section 160 is configured to be capable of controlling operation of the injection molding section 110, on the basis of an operation signal OS. The control by the controlling section 160 and the operation of the injection molding section 110 will be described below.

The blow molding apparatus 100 includes an input device 170. The input device 170 is configured to receive an operation for specifying an operation condition of each section, such as the injection molding section 110 and the blow molding section 130. The input device 170 is provided to input the operation signal OS. The operation signal OS is, for example, an operation condition of each section, or a selection item or an input item described below. The input device 170 may be a known device such as a keyboard or a mouse, for example. Further, the input device 170 may be a mobile terminal such as a smartphone.

The blow molding apparatus 100 includes a display section 180. The display section 180 is, for example, a display. In the display section 180, an operation screen (graphical user interface; GUI) displayed on the display section 180 may have a function of the input device 170, as in a touch panel display or the like. In this case, a configuration may be adopted in which an operation for specifying the operation condition of each section is received on the basis of the selection item or the input item (input value) displayed on the operation screen.

The display section 180 is configured to be capable of displaying at least information associated with adjustment of a production amount of a resin container in the blow molding apparatus 100. The information related to the adjustment of the production amount is, for example, a current production amount of the resin container per unit time, an upper limit and a lower limit of the production amount of the resin container, information specifying the lip plates 153 not used, and information specifying the lip plates 153 that can be stopped from being used. The specific display of the information related to the adjustment of the production amount by the display section 180 will be described below.

### Basic Blow Molding Method

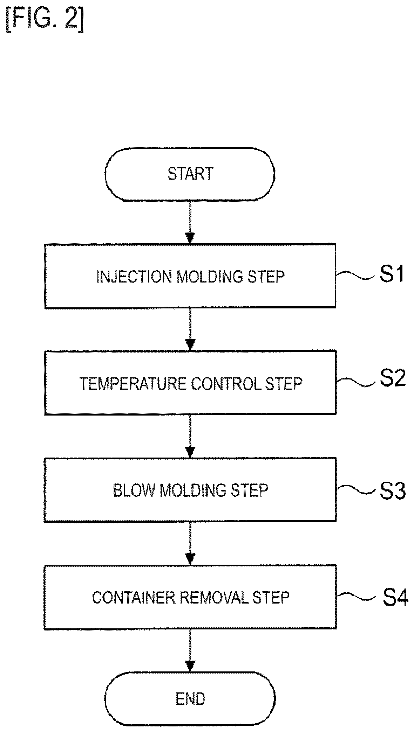

FIG. 2 illustrates a blow molding method. The blow molding method includes an injection molding step S1, a temperature adjusting step S2, a blow molding step S3, and a container removal step S4.

The injection molding step S1 includes manufacturing a preform by injection molding. In the injection molding step S1, for forming each injection cavity, the lip mold 154, the injection cavity mold (not illustrated), and the injection core mold (not illustrated) are used. The injection device 111 injects molten resin into the injection cavity on the basis of control by the controlling section 160. The injected molten resin is suitably cooled in the injection cavity, thereby forming a preform. When the manufactured preform is released from the injection cavity mold and the injection core mold, the preform is transported to the temperature adjusting section 120 as the lip plates 153 move by the rotation of the rotating plate 152 while being held by the lip molds 154.

The temperature adjusting step S2 includes controlling the temperature of the preform transported to the temperature adjusting section 120 to a temperature suitable for blow molding. The preform controlled to a temperature suitable for blow molding is transported to the blow molding section 130 as the lip plates 153 move by the rotation of the rotating plate 152 while being held by the lip molds 154.

The blow molding step S3 includes blow-molding the preform transported to the blow molding section 130. The preform is blow-molded, thereby manufacturing a resin container. The resin container manufactured by blow molding is transported to the removal section 140 as the lip plates 153 move by the rotation of the rotating plate 152 while being held by the lip molds 154.

The container removal step S4 includes removing the resin container transported to the removal section 140 to the outside of the blow molding apparatus 100. In the container removal step S4, the holding of the resin container by the lip molds 154 is completed. The resin container removed to the outside of the blow molding apparatus 100 is transported to a subsequent step or the like in which inspection or the like is performed.

The controlling section 160 is configured to be capable of performing control, on the basis of the operation signal OS, such that the injection molding section 110 is intermittently operated. In other words, in the injection molding step S1, it is possible to select, on the basis of the operation signal OS, that injection molding is performed intermittently. As an example in which the controlling section 160 performs an intermittent operation on the injection molding section 110, two types of modes, that is, a lip plate restriction mode and a production amount adjustment mode, will be described.

### Lip Plate Restriction Mode

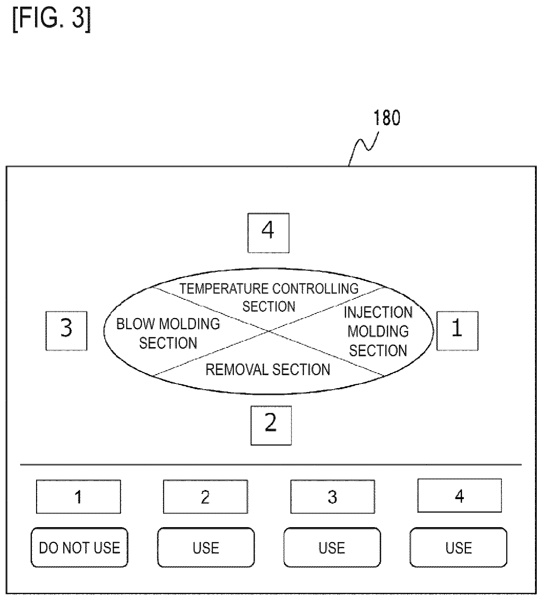

The lip plate restriction mode will now be described with reference to FIG. 1 and FIG. 3. The lip plate restriction mode is a mode in which the injection molding section 110 is controlled by the controlling section 160 such that a specified lip plate 153 is not used for manufacturing the preform and the resin container. In the lip plate restriction mode, specification is made as to whether each of the lip plates 153 is to be used for manufacturing the resin container. In the lip plate restriction mode, the "operation condition of each section" is, for example, that the injection molding section 110 operates such that the specified lip plates 153 are not used for manufacturing the preform.

FIG. 3 illustrates a screen display by the display section 180 in the lip plate restriction mode. As illustrated in FIG. 3, an upper portion of the display section 180 indicates which of the first lip plate 153A, the second lip plate 153B, the third lip plate 153C, and the fourth lip plate 153D are present in the injection molding section 110, the temperature adjusting section 120, the blow molding section 130, and the removal section 140.

For example, the number "1" surrounded by a square frame is displayed rightward of the description "Injection molding section". This indicates that the first lip plate 153A is present in the injection molding section 110 (refer to FIG. 1 as well).

Further, the number "2" surrounded by a square frame is displayed below the description "Removal section". This indicates that the second lip plate 153B is present in the removal section 140. The same applies to the numbers displayed near "Blow molding section" and "Temperature adjusting section".

Further, as illustrated in FIG. 3, a lower portion of the display section 180 indicates whether each of the first lip plate 153A, the second lip plate 153B, the third lip plate 153C, and the fourth lip plate 153D is used for manufacture of the resin containers.

For example, below the number "1" surrounded by a square frame in the lower portion of the display section 180, there is the display "Do not use". This means that the first lip plate 153A is specified as not being used for the manufacture of resin containers.

Further, below the number "2" surrounded by the square frame, there is the display "Use". This means that the second lip plate 153B is specified as being used for the manufacture of resin containers. The same applies to the displays related to the numbers "3" and "4".

In the lip plate restriction mode, specification is made as to whether to use each lip plate 153 by the input device 170. When a lip plate 153 not to be used is newly specified by the input device 170, the input device 170 transmits the operation signal OS including information specifying at least one lip plate 153 to the controlling section 160. The information specifying the lip plate 153 is an example of information related to adjustment of the production amount. Further, the information specifying the lip plates 153 is an example of the operation condition, the selection item, or the input item (input value) of the blow molding section 130 specified by the input device 170.

The controlling section 160 causes the display section 180 to change the display of "Use" and "Do not use" of each lip plate 153 on the basis of the operation signal OS. Furthermore, the controlling section 160 performs control such that the injection molding section 110 does not perform injection molding with respect to the injection cavity constituted by the specified lip plates 153.

In the illustration of FIG. 3, the first lip plate 153A is specified as the lip plate 153 not to be used. At this time, molten resin is not injected from the injection device 111 into the injection cavity, a part of which is constituted by the first lip plate 153A (refer to FIG. 1). Therefore, in a case in which the first lip plate 153A is disposed in the injection molding section 110, the preform is not molded. Subsequently, the display section 180 displays "Use" for the second lip plate 153B transported from the removal section 140. At this time, molten resin is injected from the injection device 111 into the injection cavity, a part of which is constituted by the second lip plate 153B. Therefore, in a case in which the second lip plate 153B is disposed in the injection molding section 110, the preform is molded.

Note that the first lip plate 153A, which is the lip plate 153 not to be used for the manufacture of the resin containers, is indicated by hatching in FIG. 1 for emphasis.

Thus, in the lip plate restriction mode, the controlling section 160 can perform control such that the injection molding section 110 operates intermittently (molding the preform while skipping some of the lip plates 153 of the rotating plate 152).

### Production Amount Adjustment Mode

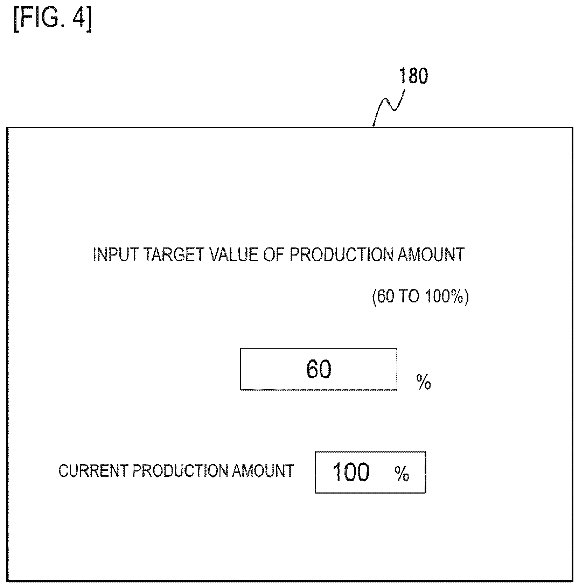

The production amount adjustment mode will now be described with reference to FIG. 4 to FIG. 7. The production amount adjustment mode is a mode in which the controlling section 160 controls the injection molding section 110 such that the production amount per unit time is a target value. In the production amount adjustment mode, the "operation condition of each section" is, for example, that the injection molding section 110 operates such that some of the lip plates 153 are not used so as to achieve the specified production amount.

FIG. 4 illustrates the screen display by the display section 180 in the production amount adjustment mode. The display section 180 displays "Input target value of production amount" and, below this message, a field for inputting a target value of the production amount between 60 and 100%. A production amount of 100% indicates a production amount per unit time in a preset molding cycle when the injection molding section 110 operates so as to perform injection molding with all lip plates. The target value of the production amount is input by the input device 170.

Furthermore, the display section 180 displays the current production amount. The display section 180 in FIG. 4 indicates that the current blow molding apparatus 100 is currently operating at a production amount of 100% and is to be operated so as to reduce the production amount so that the production amount is 60% of the target value.

Adjustment of the production amount is performed by the injection molding section 110 intermittently operating in the injection cavity formed by the first lip plate 153A to the fourth lip plate 153D. The target value of the production amount is input by the input device 170. When the target value of the production amount is input, the input device 170 transmits the operation signal OS including information related to the target value of the production amount to the controlling section 160. The information related to the target value of the production amount is an example of information related to adjustment of the production amount. Further, the information related to the target value of the production amount is an example of the operation condition, the selection item, or the input item (input value) of the blow molding section 130 specified by the input device 170.

The controlling section 160 controls the injection molding into the injection cavity by the injection molding section 110 on the basis of the operation signal OS such that the production amount per unit time of the resin container is the target value.

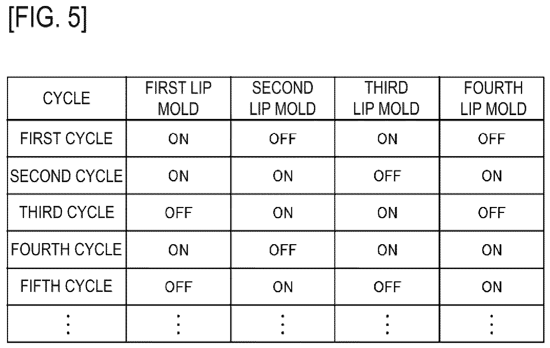

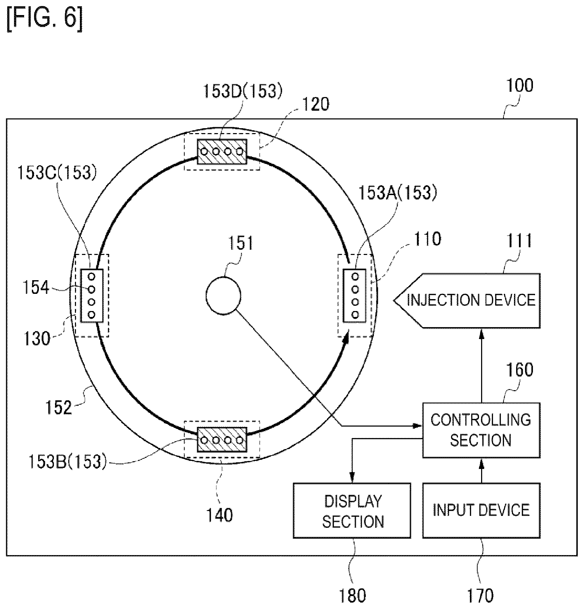

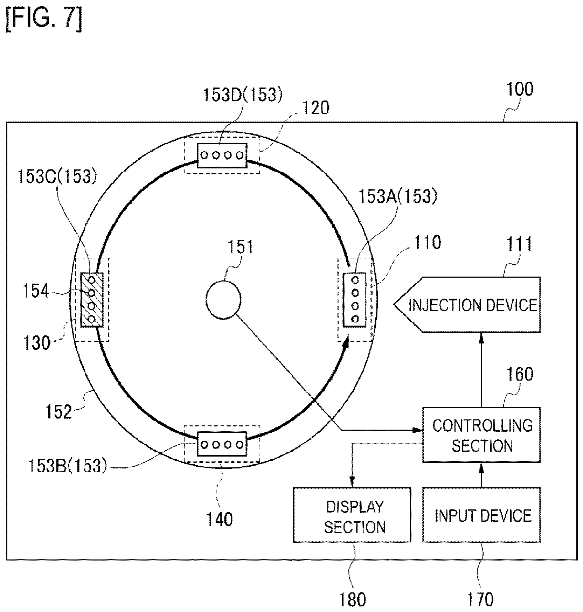

Next, an example of control in the production amount adjustment mode will be described. FIG. 5 illustrates a pattern of intermittent operation of the injection molding section 110 according to the production amount adjustment mode. FIG. 6 illustrates the lip plates where the injection molding section 110 does not operate in a first cycle. FIG. 7 illustrates the lip plate 153 where the injection molding section 110 does not operate in a second cycle. Note that, in FIG. 5 to FIG. 7, a case in which the production amount is adjusted to 60% is described. Further, the lip plates 153 hatched in FIG. 6 and FIG. 7 indicate lip plates where injection molding is not performed.

The controlling section 160 adjusts the production amount on the basis of a pattern predetermined in accordance with each production amount. The controlling section 160 may be configured to receive the pattern predetermined in accordance with each production amount from a database stored in a storage section (not illustrated), for example. The pattern illustrated in FIG. 5 is a pattern predetermined to achieve a production amount of 60%.

As illustrated in FIG. 5, looking at the row of the first cycle, the first lip plate 153A to the fourth lip plate 153D are "ON", "OFF", "ON", "OFF". At this time, as illustrated in FIG. 6, in the first cycle of rotation of the rotating plate 152, the injection molding section 110 injects molten resin into the injection cavity formed by the first lip plate 153A and the third lip plate 153C. On the other hand, the injection molding section 110 does not inject molten resin into the injection cavity formed by the second lip plate 153B and the fourth lip plate 153D. Therefore, in the first molding cycle, in a case in which the first lip plate 153A and the third lip plate 153C are disposed in the injection molding section 110, the preform is molded. On the other hand, in a case in which the second lip plate 153B and the fourth lip plate 153D are disposed in the injection molding section 110, the preform is not molded.

Further, looking at the row of the second cycle, the first lip plate 153A to the fourth lip plate 153D are "ON", "ON", "OFF", "ON". At this time, as illustrated in FIG. 7, in the second cycle of rotation of the rotating plate 152, the injection molding section 110 injects molten resin into the injection cavity formed by the first lip plate 153A, the second lip plate 153B, and the fourth lip plate 153D. On the other hand, the injection molding section 110 does not inject molten resin into the injection cavity formed by the third lip plate 153C. Therefore, in the second molding cycle, in a case in which the first lip plate 153A, the second lip plate 153B, and the fourth lip plate 153D are disposed in the injection molding section 110, the preform is molded. On the other hand, in a case in which the third lip plate 153C is disposed in the injection molding section 110, the preform is not molded.

The controlling section 160 controls the injection molding section 110 until the fifth cycle in the same way according to the pattern. In a cycle of five cycles, 20 lip plates 153 from the first lip plate 153A of the first cycle to the fourth lip plate 153D of the fifth cycle are circulated and transported to the injection molding section 110. According to FIG. 5, the injection molding of the preform is performed with respect to the injection cavity formed by twelve of the lip plates 153 and thus, when the resin container is manufactured up to a cycle of five cycles, the production amount is 60% in a case in which injection molding is performed for all 20 lip plates 153.

The manufacture of the resin container in the sixth and subsequent cycles is performed by repeating, as one set, the cycle of the first cycle to the fifth cycle.

Thus, in the production amount adjustment mode, the controlling section 160 can perform control such that the injection molding section 110 is operated intermittently.

In the blow molding apparatus for resin containers, improving the production amount per unit time exists as a general challenge. However, the circumstances at manufacturing sites vary depending on the case, and there is a case in which operation differing from the most production-efficient operation of the blow molding apparatus is temporarily desired.

As a specific example, when a defect such as scratching of a lip plate occurs, a blow molding apparatus that can only perform the most production-efficient blow molding operation would, in the related art, need to stop operation until the defective lip plate is replaced with a non-defective lip plate, even though non-defective lip plates are attached to the blow molding apparatus. However, it would be effective if the blow molding apparatus could continue operating with only the remaining lip plates without injection molding being performed with the defective lip plate, until the defective lip plate is replaced with a non-defective lip plate.

Further, for example, in a case in which there is a shortage of workers who perform subsequent step processing such as inspection, a processing amount per unit time in the subsequent step may not reach the production amount per unit time of resin containers. In this case, in the related art, the amount of resin containers that cannot be fully processed and thus accumulate in a subsequent step increases over time. However, it would be more efficient if the blow molding apparatus could be operated such that the production amount per unit time matches what can be processed in the subsequent step.

However, changing the cycle time to reduce the production amount per unit time is difficult. In the hot parison type blow molding apparatus in which each molding step is performed simultaneously in parallel, the cycle time is the time interval at which resin containers are removed outside the device by the removal section 140 (other examples include the time interval at which a preform is molded by the injection molding section 110 or the time interval at which a container is molded by the blow molding section 130), and is also the longest processing time of each molding step (standby time of the lip plates 153 in each molding section). In the manufacture of resin containers using the hot parison method, optimal molding conditions (amount of heat retained by the preform during injection molding, processing time and processing method of the temperature adjusting step, pressure and introduction timing of blow air, and the like) are determined to meet the production amount per unit time (molding cycle, cycle time) desired by the customer, while considering resin materials used, a shape of the preform, a shape of the resin container, and the like. When the molding cycle is changed, the processing time of each molding step also fluctuates, and deviation from the determined optimal molding conditions occurs. Therefore, when the resin container is manufactured under conditions causing deviation from the optimum cycle time, a defective product occurs, and thus changing the molding cycle is not an appropriate means for quickly adjusting the production amount.

Further, adjusting the production amount by stopping the operation of the blow molding apparatus every time production becomes excessive is not desirable. When a certain period of time has elapsed after stopping the operation of the blow molding apparatus, the molten resin retained in the injection device deteriorates and can no longer be used for manufacture of the resin container. Further, to start operation of the blow molding apparatus, it is necessary to perform startup work until operation reaches a state suitable for manufacture of the resin container. For this reason, frequently stopping the operation of the blow molding apparatus is undesirable both in terms of the yield of resin materials and in terms of reducing manufacturing time.

According to the blow molding apparatus 100 and the manufacturing method having the configurations described above, the injection molding section 110 is controlled, on the basis of the operation signal OS input by the user, to operate intermittently. This makes it possible to quickly adjust the production amount without changing the cycle time itself related to the manufacture of the resin container.

The blow molding apparatus 100 having the configuration described above includes the input device 170 for inputting an operation signal. This facilitates the operation related to adjustment of the production amount by the user.

The blow molding apparatus 100 having the configuration described above includes the display section 180 configured to be capable of displaying information associated with the adjustment of the production amount. This makes it possible to present information related to the adjustment of the production amount to the user in an easy-to-understand manner.

According to the configuration described above, as exemplified in the lip restriction mode, injection molding is not performed on the specified lip plates 153, thereby facilitating intermittent operation by the injection molding section 110. Accordingly, even when injection molding is not performed on the specified lip plates 153, the remaining lip plates 153 are used, making it possible to continuously perform the manufacture of the resin container.

According to the configuration described above, as exemplified in the production amount adjustment mode, injection molding into the injection cavity by the injection molding section 110 is controlled such that the production amount becomes the target value, on the basis of the operation signal OS including the information of the target value of the production amount per unit time. As a result, the production amount is adjusted quickly without changing the predetermined molding cycle.

In both the lip plate restriction mode and the production amount adjustment mode, the controlling section 160 performs control such that the injection molding section 110 intermittently operates in lip plate units. In other words, in the lip plates 153 where injection molding is performed, molten resin is injected into the injection cavity formed by all of the lip molds 154. Further, in the lip plates 153 where injection-molding is not performed, molten resin is not injected into the injection cavity formed by all of the lip molds 154. In this way, the control in a case in which injection molding is intermittently performed is applied in units of the lip plate 153, making it possible to simplify control by the controlling section 160.

As illustrated in FIG. 5, desirably control is performed such that injection molding by the injection molding section 110 is performed with the lip plate 153 transported to the injection molding section 110 following the lip plate 153 with which the injection molding was not performed by the injection molding section 110. According to the example illustrated in FIG. 5, in the first cycle, injection molding is performed with the third lip plate 153C transported to the injection molding section 110 following the second lip plate 153B with which injection molding was not performed. Further, injection molding is performed with the first lip plate 153A of the second cycle transported to the injection molding section 110 following the fourth lip plate 153D of the first cycle with which injection molding was not performed.

As described above, the molten resin being left in the injection device 111 for a long period of time is undesirable from the viewpoint of deterioration of the molten resin. According to the configuration described above, injection molding is not skipped for two consecutive lip plates 153 continuously transported, making it possible to suppress the occurrence of deterioration of the molten resin inside the injection device 111.

More preferably, the controlling section 160 desirably controls the injection molding section 110 such that the number of times injection molding is performed is equal with respect to the first lip plate 153A to the fourth lip plate 153D in the production amount adjustment mode. In the example illustrated in FIG. 5, the first lip plate 153A to the fourth lip plate 153D are subject to injection molding three times each in a cycle of five cycles. Thus, the controlling section 160 performs control such that the first lip plate 153A to the fourth lip plate 153D are used an equal number of times each, thereby suppressing significant consumption of any one of the lip plates 153.

Although embodiments of the present disclosure have been described above, the technical scope of the present disclosure, needless to say, should not be construed as being limited by the description of the present embodiments. It should be understood by a person skilled in the art that the present embodiments are merely examples, and that various modifications of the embodiments are possible within the scope of the invention described in the claims. The technical scope of the present disclosure is determined on the basis of the scope of the invention described in the claims and equivalent scopes thereof.

For example, the lip plate restriction mode and the production amount adjustment mode may be simultaneously applied. As an example, the controlling section 160 may control the injection molding section 110 such that one lip plate 153 is always not used in the lip plate restriction mode, and the remaining three lip plates 153 are used an equal number of times in the production amount adjustment mode.

Further, the operation pattern of the injection molding section 110 in the production amount adjustment mode is not limited to the example illustrated by the present embodiment. For example, although an example is described in which one set is constituted by five cycles, the number of cycles constituting one set may be more or may be less.

In the present embodiment, the blow molding apparatus 100 including the injection molding section 110, the temperature adjusting section 120, the blow molding section 130, and the removal section 140 is illustrated as an example. However, the present disclosure is not limited to the example illustrated by the embodiment. For example, a blow molding apparatus not including a temperature adjusting section may be adopted. In this case, the blow molding apparatus may include three lip plates corresponding to the injection molding section, the blow molding section, and the removal section. In such a blow molding apparatus as well, the lip plate restriction mode and the production amount adjustment mode of the present disclosure can be implemented.

The present application appropriately incorporates contents disclosed in JP 2023-011966 A filed on Jan. 30, 2023.

### REFERENCE SIGNS LIST

S1 Injection molding step
S2 Temperature adjusting step
S3 Blow molding step
S4 Container removal step
100 Blow molding apparatus
110 Injection molding section
111 Injection device
120 Temperature adjusting section
130 Blow molding section
140 Removal section
151 Drive section
152 Rotating plate
153 Lip plate
153A First lip plate
153B Second lip plate
153C Third lip plate
153D Fourth lip plate
154 Lip mold
160 Controlling section
170 Input device
180 Display section

## Claims

1. A blow molding apparatus for a resin container, the blow molding apparatus comprising:
an injection molding section configured to injection-mold a preform;
a blow molding section configured to blow-mold the preform to manufacture a resin container; and
an input device configured to receive an operation for specifying an operation of each section,
wherein the injection molding section is controllable, based on an operation condition specified by the input device, so as to be operated intermittently.

2. The blow molding apparatus for a resin container according to claim 1, wherein
the input device receives an input of an operation signal.

3. The blow molding apparatus according to claim 1, further comprising:
a display section configured to be capable of displaying at least information associated with adjustment of a production amount in the blow molding apparatus.

4. The blow molding apparatus according to claim 1, comprising
a plurality of lip plates constituting part of an injection cavity, wherein
each of the plurality of lip plates is configured to circulate between the injection molding section and the blow molding section,
the input device is configured to be capable of receiving an operation for specifying at least one of the plurality of lip plates, and
the injection molding section does not perform injection molding with respect to the injection cavity constituted by the at least one lip plate specified by the input device.

5. The blow molding apparatus according to claim 1, comprising
a plurality of lip plates constituting part of an injection cavity, wherein
each of the plurality of lip plates is configured to circulate between the injection molding section and the blow molding section,
the input device is configured to be capable of receiving an operation for specifying a target value of a production amount per unit time, and
the injection molding section is configured to execute injection molding into the injection cavity such that the production amount of the resin container per unit time is the target value.

6. The blow molding apparatus according to claim 1, comprising
a plurality of lip plates, wherein
each of the plurality of lip plates is configured to circulate between the injection molding section and the blow molding section,
the plurality of lip plates each include a lip mold, the lip mold forming part of a respective one of a plurality of injection cavities, and
the injection molding section intermittently operates in units of the lip plate.

7. The blow molding apparatus according to claim 6, wherein
the injection molding section performs injection molding with, among the plurality of lip plates, a lip plate to be transported to the injection molding section following a lip plate with which injection molding has not been performed.

8. A blow molding method, comprising:
an injection molding step of manufacturing a preform by injection molding; and
a blow molding step of blow-molding the injection-molded preform to blow-mold a resin container, wherein
in the injection molding step, it is possible to select, based on an input value to an input device, whether the injection molding is intermittently performed.
